# EUROPEAN PATENT SPECIFICATION

(11) **EP 2 025 205 B1**
(45) Date of publication and mention of the grant of the patent: **11.01.2017**
(21) Application number: 07873794.7
(22) Date of filing: 25.05.2007
(51) Int. Cl.: H05B 33/00, G01N 23/223

(54) **PORTABLE X-RAY FLUORESCENCE INSTRUMENT WITH TAPERED ABSORPTION COLLAR**
TRAGBARES RÖNTGENFLUORESZENZINSTRUMENT MIT KONISCHEM ABSORPTIONSRING
INSTRUMENT PORTABLE DE FLUORESCENCE X AYANT UN COLLIER D'ABSORPTION CONIQUE

(30) Priority: 25.05.2006 US 440570
(43) Date of publication of application: 18.02.2009
(73) Proprietor: Thermo Scientific Portable Analytical Instruments Inc., Tewksbury, MA 01876 (US)
(72) Inventor: GRODZINS, Lee, Lexington, MA 02421 (US)
(74) Representative: Boult Wade Tennant
(86) International application number: PCT/US2007/012464
(87) International publication number: WO 2008/105782

(56) References cited:
- WO-A-2005/010514
- WO-A2-00/37928
- US-A- 5 740 223
- US-B2- 6 965 663

## Description

US Patent Application Serial No. 11/115,977, filed April 27, 2005 and not yet published, and US Patent No. 6,965,118, and its priority document, Provisional Patent Application, Serial No. 60/472,674, filed May 22, 2003, are all incorporated herein by reference.

### FIELD OF THE INVENTION

The invention relates methods and devices for performing x-ray fluorescence measurements while preventing exposure of personnel to dangerous levels of ambient radiation.

### BACKGROUND OF THE INVENTION

X-ray fluorescence (XRF) instruments measure properties of material by irradiating the material with x-rays or gamma rays and analyzing the fluorescent radiation to determine specified properties. The term "x-rays", as used herein and in any appended claims, refers to radiation that is generated either by radioactive sources, or by instruments such as x-ray tubes, and encompasses within the term all forms of penetrating radiation including gamma rays. The specified properties to be determined may include the elemental composition of the irradiated object, or the distribution of a particular element in the near surface of the object, or the density of the object, or the morphology.

XRF instruments typically have collimated beams and appropriate shielding so that the operator is not subjected to undue ionizing radiation. For example, laboratory XRF instruments typically require the operator to completely cover the instrument and the sample so that negligible radiation emanates from the XRF instrument.

Portable XRF instruments have special radiation shielding requirements since their use typically requires that the operator hold the instrument while making the measurements. The ambient radiation levels are a primary concern. The operator and any nearby people must not be subject to undue levels of ionizing radiation. XRF instruments that inspect houses for lead paint are one specific embodiment of this invention and offer a good example of its need.

Portable XRF instruments are now the choice for quantitative determinations of the concentration of lead in painted walls of a house. Commercial portable XRF lead-paint instruments use either radioactive sources, such as ¹⁰⁹Cd and ⁵⁷Co, or x-ray tubes, to generate the fluorescing radiation that excite the lead atoms in the painted surfaces. The intensity of the fluoresced characteristic x-rays of lead gives measure to its concentration and allows the inspector to determine whether the paint is out of compliance with established regulatory limits.

The allowable ambient radiation levels differ from country to country. The United States regulations place restrictions on the radiation levels in the ambient space directly behind the instrument's x-ray exit port. Of special concern is the space where the operator may have his hands or face. Minimal attention is paid to the radiation levels in the space between the wall being inspected and the surfaces of the operator's hands, arms and body when taking the measurements. The radiation limitations in the US can be satisfied by applying shielding in the instrument itself.

Radiation limitations in Europe are currently significantly more stringent than those in the United States. The acceptable level of radiation for an occupation worker is ten times lower; that is, 1 µSv/hr for Europe and 10 µSv/hr for the US. (µSv/hr is the standard abbreviation for microSievert per hour, a level of radiation equivalent to 100 microrem of radiation in now obsolete units.) Moreover, and of special importance to this invention, France requires that no point 10 cm from any accessible surface of the XRF instrument exceed the 1 µSv/hr level. That requirement cannot be satisfied with the shielding inside an XRF instrument.

Commercial hand-held x-ray fluorescing instruments have radiation absorbing material in the nose of the instrument. This absorbing material is designed to absorb radiation that comes directly from the source but is not going out through the exit port to strike the sample under study. This absorbing material also absorbs radiation that has been once-scattered so that the once-scattered radiation does not enter the detector and does not confound the measurement being made. The absorbing material in the nose of the inspection instrument, however, cannot prevent radiation that is multiply scattered such that it emerges from the target in a place and direction in such a way as to not intersect the nose of the instrument.
International patent application number PCT/US2004/016296 describes a radiation shield for portable x-ray fluorescence instruments where the shield attaches to an end of the instrument and has a platen of attenuating material.

### SUMMARY OF THE INVENTION

In accordance with the intention, an instrument is provided for measuring elemental composition of a test material, as defined in claim 1.

In further embodiments of the invention, the attenuating material may be a metal of atomic number greater than 45 embedded in a polymer matrix. The platen of attenuating material may be coupled to the instrument by means of fasteners, and may be detachable from the instrument, and may also include outer layers of an elastomer.

### BRIEF DESCRIPTION OF THE DRAWINGS

The foregoing features of the invention will be more readily understood by reference to the following detailed description, taken with reference to the accompanying drawings, in which:
Fig. 1 is a cross-sectional view of a hand-held XRF instrument with a tapered radiation shield for protecting the user from ionizing radiation that emanates from the test sample, in accordance with an embodiment of the present invention;
Fig. 2 is a perspective view of a radiation shield, in accordance with an embodiment of the present invention, depicting in an exploded format, its attachment to an XRF instrument;
Fig. 3 is a cross-section of a radius of the radiation shield of Fig. 2, showing the a laminated shield structure; and
Fig. 4 is a perspective view from beneath of a radiation shield allowing for use of an F instrument in a corner.

### DETAILED DESCRIPTION OF EMBODIMENTS

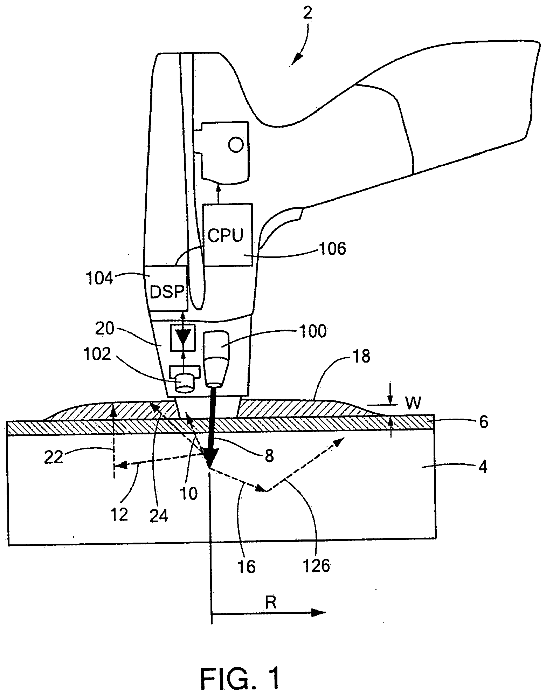

In accordance with embodiments of the present invention, and as described now with reference to Fig. 1, shielding in the form of a collar is used to prevent multiple scattered x-rays from exiting the wall relatively far from the XRF instrument with sufficient intensity to exceed regulatory limits.

To fully appreciate why the present invention is needed and how it must be designed we need to understand the origin of the ambient radiations that result when a beam of x-rays enters material and gets Compton scattered.

### The Physics of Ambient Radiation

The following discussion refers particularly to an XRF instrument used for lead paint analysis, however it should be appreciated that the conclusions drawn, and the invention described, are applicable to a wide group of applications, especially the XRF analysis of soils and plastics.

The energies of the x-rays that fluoresce lead are typically in the 20 keV range when the L x-rays of lead at 10.5 keV and 12.6 keV are used for the analysis, and above 88 keV when the K x-ray lines, at 72.8 keV and 75 keV, are used for the analysis. In the following description we will restrict ourselves to fluorescing energies of 22.2 keV (from ¹⁰⁹Cd) used to excite the L lines, and 122 keV (from ⁵⁷Co) used to excite the K lines. It is to be understood, however, that these particulars are presented by way of illustration and not by way of limitation.

Referring to Fig. 1, a hand-held XRF instrument **2** is depicted in a position abutting a wall **4**. Instrument **2** emits penetrating radiation predominantly along a propagation axis designated by arrow **8** (which numeral also designates the emitted x-rays) and will be discussed herein as an XRF instrument **2** that emits x-rays **8**. X-rays **8** are generated by source **100**, which may be a radioactive source, as shown, or an x-ray tube, or other x-ray generating device. X-rays **8** exit from the XRF instrument **2**, and enter a test sample **6**, which, in the example depicted, is a paint layer on wall **4**. Some of the x-rays **8** give rise to fluorescence **10**, or scattering, back into the instrument **2** to either be counted in the detector **102** of XRF instrument **2** or absorbed by the walls **20** of the instrument. Detection of fluorescence photons gives rise to a detector signal which is processed by digital signal processor **104** and controller **106** to produce a spectrum that provides for identification of the elemental content of the test sample **6** in accordance with techniques described, for example, in US Patent No. 6,765,986, (to Grodzins et al., issued July 20, 2004), which is incorporated herein by reference.

Some of the x-rays **24**, scatter backwards out of the wall, and miss the XRF instrument. Many x-rays, **12** and **16**, however, scatter into the wall material itself. And some of those that scatter into the wall material scatter again resulting in x-rays **22** and **126** that exit the painted wall at a considerable distance from the XRF instrument **2**.

The relative intensity of the x-rays that exit the wall in this way depends on the angular distributions of the Compton scattering, the energies of the scattered radiations and the distances the scattered radiations travel in the material of the wall between interactions. As we describe below, the scattering is, within a factor of about 2, isotropic; the energy of the scattered x-rays are almost as high as the incident energy; and the distance that the x-ray cascade travels in the wood before dissipating can be many centimeters. Therefore, shielding, as described herein, is desirable to reduce the levels of radiation to which a user is exposed to within specified safety levels, such as those enumerated above.

The angular distributions of Compton scattering for the x-rays of interest in XRF are similar to the distributions of Thompson (classical) scattering. The probability of Thompson scattering through an angle θ is proportional to (1 + cos² θ). The intensity of backscattering is equal to that of forward scattering and side scattering is half as strong.. The scattering of 22 keV x-rays follows the Thompson formula within a few percent. The Compton scattering of 122 keV x-rays is more forward peaked but side scatter and back scatter remain very probable.

The change in the energy of the x-rays when scattered through a particular angle θ depends strongly on the x-ray energy. A 22 keV x-ray scattered through 90° only loses 1 keV to the scattering electron so that the scattered x-rays has 21 keV. A 122 keV x-ray scattered through 90° loses about 24 keV and ends up being 98 keV.

The distance that the x-rays travel in the wall medium depends strongly on the composition of the medium. It is useful to measure that distance in mean free paths (MFP). The mean free path for an incident x-ray is the distance a beam of the x-rays will travel in the medium before the intensity of the incident x-ray has dropped by a factor of 2.718. The intensity of the incident beam may drop because x-rays have been absorbed by the photo-electric effect, in which case the x-rays will not contribute to ambient radiation.

The photoelectric effect results in secondary x-rays generated when the photoelectric excited atom relaxes to its ground state. These characteristic x-rays can be intensive enough in special circumstances to add significantly to the ambient radiation. These secondary x-rays may also advantageously be absorbed by the radiation shield that is described herein. Additionally, radiation shield **18** may also advantageously block singly scattered x-rays such as those designated by numeral **24.**

If the intensity of the incident beam drops because of scattering, then the incident x-ray has simply been transformed into a lower energy x-ray traveling in a new direction and it can still contribute to ambient radiation.

Table 1 gives the mean free paths of the 22 keV and the 122 keV x-rays, and the energies of the x-rays of 21 keV and 98 keV after a 90° scattering. The materials are air, wood, plaster, aluminum, and iron.

**Table 1. Mean Free Paths in Centimeters**

| | 22 keV | 21 keV | 122 keV | 98 keV |
|---|---|---|---|---|
| air | 1756 | 1592 | 5455 | 5162 |
| wood | 3.59 | 3.26 | 11.11 | 10.55 |
| brick | 0.28 | 0.24 | 3.42 | 3.13 |
| aluminum | 0.15 | 0.13 | 2.59 | 2.33 |
| iron | 0.07 | 0.06 | 0.54 | 0.36 |

The mean free paths for 22 keV radiations are many meters in air, several centimeters in wood and several millimeters or less in heavy materials that make up common walls. The 122 keV radiations used to excite the K lines of lead go several to many centimeters in all common wall material but steel.

Table 2, which gives the probability that an x-ray will be scattered at least once in traversing the material before being absorbed gives further insight into what is happening.

**Table 2. Probability that the X-ray will be Scattered at Least Once**

| | 22 keV | 21 keV | 122 keV | 98 keV |
|---|---|---|---|---|
| air | 40% | 33% | 99.6% | 98.6% |
| wood | 40% | 33% | 99.3% | 98.5% |
| brick | 8% | 7% | 95% | 91% |
| aluminum | 6% | 5% | 93% | 87.5% |
| iron | 0.6% | 0.5% | 52% | 38% |

From Table 1 it is apparent that any 22 keV x-rays that pass through the paint **6** into the wooden wall **4** will travel several centimeters before interacting. And when a 22 keV x-ray does interact, there is 40% probability that the x-ray will scatter and not be absorbed. Furthermore, there is a strong probability that the scattering will be to side. Those side-scattered x-rays will have almost the same energy as the incident energy and will themselves travel several centimeters before interacting. And again the probability of scattering is high. It is easy to see that a significant amount of radiation can escape from the wood **4** on the sides of the XRF instrument **2**.

Materials with higher atomic number and greater density than wood present much less of a problem because, as Table 1 and Table 2 show, the x-rays do not travel far in these materials and they quickly get absorbed.

Table 1 and Table 2 also show why K-shell XRF analyzers that measure the lead concentration by studying the K lines have a far more difficult time controlling the ambient radiation. Scattering completely dominates over absorption except for steel walls and the scattered radiations can travel 10 cm in wood before interacting.

One embodiment of a radiation shield is the tapered platen designated by numeral **18**, shown in Fig. 1. The weight of the radiation shield (or collar) **18** may be advantageously minimized by taking into account that the needed absorption thickness decreases with the radius **R** of the collar; i.e. the distance from the x-ray beam entry point. The verb "taper," and cognate terms, as used herein, refers to a substantially monotonic decrease of platen width with distance from the target spot, whether in a continuous or stepped manner, and without regard to the functional form of the decrease.

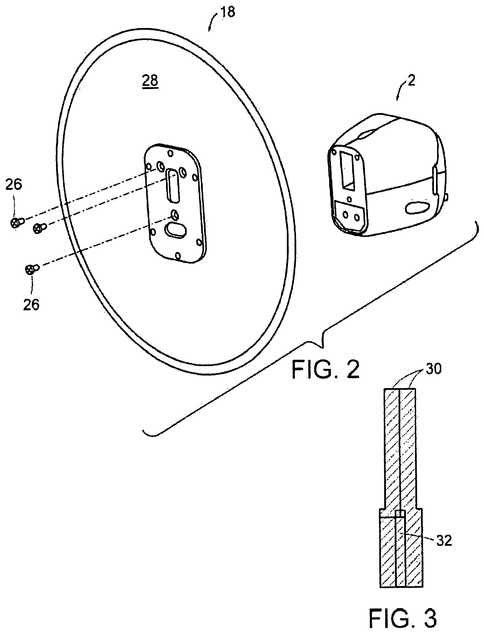

A collar **18** of parallel surfaces, described below with reference to Fig. 2, is a uniform disc of rubber (or other elastomer) filled with tungsten (or other element of atomic number typically greater than 45), and works well up to at least 50 keV.

Performance of collar **18** becomes more critical as the x-ray energy gets into the 100 keV range where, especially in light-element materials, the x-rays must suffer several to many Compton scatterings before getting stopped by absorption via photo electric interactions in the test sample. A simple calculation based on a 1 watt beam of 100 keV electrons striking a tungsten anode indicates that the collar may have to be at least 10 mean free paths thick at radial distances of a few inches.

In general, the collar diameter and the absorption must increase as the energy of the primary x-ray beam increases. As the x-ray energy increases, the weight of a collar of uniform thickness (based on the absorption needed at small radii) begins to be a significant fraction of the total weight of a hand-held instrument, and, being in the front of the instrument, a significant burden on the operator.

Consequently, collar 18 is characterized by a thickness w that varies as a function of radius R (i.e., distance from the x-ray entry point, or the irradiated region of the test sample, to the extent that the irradiated region is more properly characterized as an area rather than a point). Tapering of thickness w advantageously provides for optimizing the cross-section of collar 18 for minimum weight. Collar 18 is tapered, becoming thinner towards the outer perimeter since the number of x-rays and the mean energy of the x-rays that must be shielded decrease with distance from the entrance point of the initiating x-ray beam.

In order to understand the desirability of a tapered profile, one may consider a ring of target wall 4. Because of absorption, the number of x-rays exiting per cm² of wall, falls faster than the square of the radius measured from the point the x-ray beam enters the target wall.

In the hypothetical case of no absorption of the x-rays traveling in the wall, there will be the same number of x-rays passing through each successive ring from the center point. The number of x-rays per square cm (and hence the number of x-rays scattered out of the wall) will decrease as the square of the radius, so that the collar thickness w, assumed for the sake of simplicity to be against the wall 4, can decrease with radius R. (The absorber thickness can decrease, in embodiments not encompassed by the present invention, by log 4 (i.e. 40%) for every factor of 2 greater radial distance.)

Since wall 4 does absorb x-rays, by scattering and photoelectric interactions, the number of x-rays emanating from successive rings from the center will decrease faster than the square of the radius. Moreover, considering multiple scattering, each successive scatter decreases the x-ray energy so that the mean energy of the exiting x-rays also falls as a function of radius. Thus, the necessary thickness of absorption collar 18 can decrease rapidly with radius so that the weight of the tapered (or feathered) collar is advantageously significantly less than the weight of a collar of uniform thickness.

Radiation shield 18, in accordance with another embodiment of the invention, is shown in perspective view in Fig. 2. Eradiation shield 18 is coupled to XRF instrument **2** by fasteners **26** which may include screw, rivets, clips, or any other fasteners. Radiation shield **18** may be readily detachable or exchangeable.

In certain embodiments of the invention, radiation shield **18** has a platen **28** of shielding material, shown in cross-section in Fig. 3. The platen may be referred to herein as a 'membrane'. In a preferred embodiment, platen **28** is circular, and has a diameter of approximately 20 cm. Other shapes and sizes are within the scope of the present invention, for example, radiation shield **18** may extend outward conically from the propagation axis **8** (shown in Fig. 1). Fig. 3 shows a laminate formed of two layers of elastomer (such as rubber) with an included layer **32** of shielding material, such as a metal of high atomic number, typically greater than Z=45, embedded in a polymer matrix. Such metals may include tin, tungsten or lead. A preferred material is tungsten-filled polyvinyl chloride (PVC). The platen is preferably flexible to allow it to conform to contours of the abutted surface, such as to measure as close as possible to a corner, or to interrogate a niche in a wall such as the slide recess for a window.

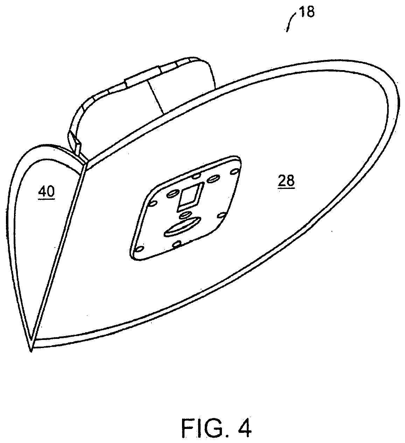

In accordance with other embodiments of the invention, referring now to Fig. 4, a section **40** of radiation shield **18** may lie in a plane other than the major part of platen **28** in order to allow the radiation shield to be used, for example, in inside corners of walls. Non-coplanar section **40** may be coupled to the rest of platen **28** at a fixed bend, or, alternatively, by a hinge, all as well-known in the art.

The described embodiments of the invention are intended to be merely exemplary and numerous variations and modifications will be apparent to those skilled in the art. All such variations and modifications are intended to be within the scope of the present invention as defined in the appended claims.

## Claims

1. A handheld XRF device (2) for measuring elemental composition of a test material (6), the device (2) comprising:
a. a source (100) of penetrating radiation for irradiating an irradiated region of the test material;
b. a detector (102) for detecting fluorescence emission by the test material (6) and generating a detector signal;
c. a controller (106) for converting the detector signal into a spectrum characterizing the composition of the test material (6); and
d. a radiation shield (18) for shielding the user from ionizing radiation emitted from the surface of the test material, comprising a platen (28) of attenuating material of varying thickness **characterized in that** the thickness varies such that, when the platen abuts a surface of the test material in use, the thickness decreases with radial distance from the irradiated region in a direction substantially parallel to the surface of the test material (6) at a rate faster than the square of the radial distance.

2. A device (2) in accordance with claim 1, wherein the attenuating material (18) is a metal of atomic number greater than 45 embedded in a polymer matrix.

3. A device (2) in accordance with claim 1, wherein the platen of attenuating material (18) is coupled to the XRF device (2) by means of fasteners (26).

4. A device (2) in accordance with claim 1, wherein the platen of attenuating material (18) is detachable from the XRF device (2).

5. A device (2) in accordance with claim 1, wherein the platen of attenuating material (18) comprises outer layers of an elastomer.

## Patentansprüche

1. Handgehaltene Röntgenfluoreszenzvorrichtung (2) zum Messen der elementaren Zusammensetzung eines Testmaterials (6), wobei die Vorrichtung (2) umfasst:
a. eine Quelle (100) durchdringender Strahlung zum Bestrahlen eines zu bestrahlenden Bereichs des Testmaterials;
b. einen Detektor (102) zum Detektieren der Fluoreszenzemission von dem Testmaterial (6) und Erzeugen eines Detektorsignals;
c. eine Steuereinrichtung (106) zum Umwandeln des Detektorsignals in ein Spektrum, welches die Zusammensetzung des Testmaterials (6) charakterisiert; und
d. eine Strahlungsabschirmung (18) zum Abschirmen des Anwenders von ionisierender Strahlung, die von der Oberfläche des Testmaterials emittiert wird, umfassend eine Platte (28) aus abschwächendem Material variierender Dicke, **dadurch gekennzeichnet, dass** die Dicke derart variiert, dass, wenn die Platte an einer Oberfläche des angewendeten Testmaterials anstößt, die Dicke mit dem radialen Abstand von dem bestrahlten Bereich in einer Richtung, die weitgehend parallel zu der Oberfläche des Testmaterials (6) ist, mit einer Geschwindigkeit abnimmt, die größer ist als das Quadrat des radialen Abstands.

2. Vorrichtung (2) nach Anspruch 1, wobei das abschwächende Material (18) ein Metall mit einer Kernladungszahl größer als 45 ist, das in einer polymeren Matrix eingebettet ist.

3. Vorrichtung (2) nach Anspruch 1, wobei die Platte des abschwächenden Materials (18) mit der Röntgenfluoreszenzvorrichtung (2) mit Hilfe von Befestigungselementen verbunden ist.

4. Vorrichtung (2) nach Anspruch 1, wobei die Platte des abschwächenden Materials (18) von der Röntgenfluoreszenzvorrichtung (2) detektierbar ist.

5. Vorrichtung (2) nach Anspruch 1, wobei die Platte des abschwächenden Materials (18) äußere Lagen eines Elastomers aufweist.

## Revendications

1. Dispositif XRF portatif (2) servant à mesurer la composition élémentaire d'un matériau d'essai (6), le dispositif (2) comprenant :
a. une source (100) de rayonnement pénétrant servant à irradier une région irradiée du matériau d'essai;
b. un détecteur (102) servant à détecter une émission de fluorescence par le matériau d'essai (6) et à produire un signal de détecteur ;
c. un contrôleur (106) servant à convertir le signal de détecteur en un spectre caractérisant la composition du matériau d'essai (6) ; et
d. un écran de rayonnement (18) servant à protéger l'utilisateur du rayonnement ionisant émis depuis la surface du matériau d'essai, comprenant une plaque (28) de matériau d'atténuation d'épaisseur variable **caractérisée en ce que** l'épaisseur varie de sorte que quand la plaque vient en butée contre une surface du matériau d'essai en cours d'utilisation, l'épaisseur diminue avec la distance radiale depuis la région irradiée dans une direction sensiblement parallèle à la surface du matériau d'essai (6) à une vitesse supérieure au carré de la distance radiale.

2. Dispositif (2) selon la revendication 1, dans lequel le matériau d'atténuation (18) est un métal de numéro atomique supérieur à 45 logé dans une matrice polymère.

3. Dispositif (2) selon la revendication 1, dans lequel la plaque de matériau d'atténuation (18) est couplée au dispositif XRF (2) grâce à des attaches (26).

4. Dispositif (2) selon la revendication 1, dans lequel la plaque de matériau d'atténuation (18) est détachable du dispositif XRF (2).

5. Dispositif (2) selon la revendication 1, dans lequel la plaque de matériau d'atténuation (18) contient des couches extérieures d'un élastomère.
